# EUROPÄISCHE PATENTANMELDUNG

(11) **EP 1 384 735 A1**
(43) Veröffentlichungstag der Anmeldung: **28.01.2004**
(21) Anmeldenummer: 02016755.7
(22) Anmeldetag: 26.07.2002
(51) Int. Cl.: C08G 18/10, C08G 18/48

(54) **Polyaldimin enthaltende Polyurethanzusammensetzung**

(71) Anmelder: Sika Technology AG, 6340 Baar (CH)
(72) Erfinder: Burckhardt, Urs, 8057 Zürich (CH)
(74) Vertreter: Isler, Jörg

(57) **Zusammenfassung**

Die vorliegende Erfindung betrifft Zusammensetzungen umfassend mindestens ein Polyurethanprepolymer A mit Isocyanatendgruppen, welches aus mindestens einem Polyisocyanat und mindestens einem Polyol hergestellt wird, und mindestens ein Polyaldimin B, welches erhältlich ist aus mindestens einem Polyamin C mit aliphatischen primären Aminogruppen und mindestens einem Aldehyd D.

Weiterhin offenbart ist die Herstellung dieser Zusammensetzungen, sowie die Herstellung des Polyaldimins.

Zusätzlich wird die Verwendung dieser Zusammensetzungen als Klebstoff, Dichtstoff, Beschichtung oder Belag beschrieben. Des weiteren zur Verfügung gestellt werden Verfahren zum Verkleben, Abdichten oder Beschichten. Schliesslich werden Artikel beschrieben, deren Oberfläche zumindest partiell mit einer solchen Zusammensetzung kontaktiert worden ist.

Wesentlicher Vorteil dieser Zusammensetzungen ist der fehlende Geruch der Zusammensetzungen vor, während und nach ihrer Aushärtung.

## Beschreibung

### Technisches Gebiet und Stand der Technik

Die Erfindung betrifft Polyurethanzusammensetzungen, umfassend mindestens ein Polyurethanprepolymer und mindestens ein Polyaldimin, die ohne störenden Geruch aushärten. Das hierfür eingesetzte Polyaldimin ist erhältlich aus einem Polyamin mit aliphatischen primären Aminogruppen (im weiteren Text vielfach auch als "aliphatisches Polyamin" bezeichnet) und einem speziellen Aldehyd.

Polyurethane werden eingesetzt unter anderem als einkomponentige, feuchtigkeitshärtende, elastische Dichtstoffe, Klebstoffe und Beschichtungen. Üblicherweise enthalten sie ein isocyanatgruppenhaltiges Polyurethanprepolymer, hergestellt aus Polyolen und Polyisocyanaten, das anschliessend mit weiteren Komponenten vermengt und bis zum Gebrauch unter Ausschluss von Feuchtigkeit aufbewahrt wird. Diese an sich bekannten Systeme weisen den Nachteil auf, dass das bei der Reaktion der Isocyanatgruppen mit Wasser entstehende CO₂-Gas zu Blasen im ausgehärteten Produkt führen kann.

Polyaldimine sind in der Polyurethanchemie als Härter bekannte Verbindungen, beschrieben beispielsweise bei US 3,420,800 und US 3,567,692. Als Polyaldimine werden Moleküle bezeichnet, welche zwei oder mehr Aldimingruppen R-CH=N-R' aufweisen. Aus isocyanatgruppenhaltigen Polyurethanprepolymeren und Polyaldiminen lassen sich einkomponentige Produkte mit guten mechanischen Gebrauchseigenschaften formulieren, die ausreichend lagerstabil sind und bei Kontakt mit Wasser oder Feuchtigkeit aus der Luft rasch aushärten. Dabei hydrolysieren die Polyaldimine mit Wasser zu den entsprechenden Aldehyden und Polyaminen, worauf letztere mit den Isocyanatgruppen des Polyurethanprepolymers reagieren und dieses ohne die Freisetzung von CO₂ und somit ohne die Bildung von Blasen aushärten.

Polyaldimine aliphatischer Polyamine und ihre Anwendung als Härter für Polyurethane sind bestens bekannt. Sie werden beispielsweise beschrieben in US 3,932,357.

Üblicherweise werden Polyaldimine von relativ flüchtigen Aldehyden verwendet, die bekanntlich einen besonders intensiven Geruch aufweisen. Bei ihrer Anwendungen ist deshalb eine gute Lüftung oder ein Atemschutz erforderlich, insbesondere wenn zusätzlich organische Lösemittel eingesetzt werden. Für Anwendungen, in welchen mit vorwiegend lösemittelfreien und hochviskosen Produkten in dicken Schichten gearbeitet wird, wie das beispielsweise bei elastischen Abdichtungen und Verklebungen der Fall ist, ist der Geruch des bei der Hydrolyse der Polyaldimine freigesetzten Aldehyds speziell störend, da er über einen längeren Zeitraum bestehen bleibt. Dies ergibt sich daraus, dass einerseits die vollständige Aushärtung einer in dicker Schicht applizierten feuchtigkeitshärtenden Polyurethanzusammensetzung relativ lange dauert, weil die Diffusion des zur Härtung nötigen Wassers durch das bereits ausgehärtete Material hindurch nach innen zunehmend langsamer wird; und dass andererseits der bei der Härtungsreaktion freigesetzte Aldehyd immer langsamer durch die dicker werdenden Schichten des ausgehärteten Materials nach aussen diffundiert. Die durch das Entweichen des Aldehyds nach der Härtung des Produkts verursachte Geruchsbelastung wird für gewisse Anwendungen, wie beispielsweise im Aussenbereich von Gebäuden, zum Teil toleriert. Weil aber der intensive Aldehyd-Geruch zu Kopfschmerzen und Übelkeit führen kann, besteht auch in diesen Anwendungsbereichen zunehmend der Wunsch nach geruchsfreien Systemen. Dem Fachmann ist klar, dass der Begriff "geruchsfrei" schwierig zu definieren ist. Er soll hier und im gesamten Dokument als "von menschlichen Individuen mit dem Geruchssinn nicht oder nur geringfügig wahrnehmbar (riechbar)" zu verstehen sein.

In anderen, sogenannten geruchssensiblen Anwendungen hingegen werden solche Geruchsbelastungen grundsätzlich nicht toleriert. Besonders geruchssensibel sind Anwendungen in geschlossenen Räumen, wie beispielsweise das Abdichten von Fugen im Innern von Gebäuden oder das Verkleben von Bauteilen im Innenraum von Fahrzeugen. Die Geruchsfreiheit ist hier eine unerlässliche Bedingung, und zwar auch während und kurz nach der Applikation eines Produkts. Bei Anwendungen im Innenraum von Fahrzeugen werden bezüglich flüchtigen Substanzen, die aus beispielsweise einem Klebstoff entweichen, generell strenge Massstäbe angelegt. So sind in der Automobilindustrie entsprechende Grenzwerte für die aus einem Klebstoff entweichenden flüchtigen Anteile, das sogenannte "Fogging", festgelegt (Messmethode: siehe z.B. DIN 75201).

Es gab bisher verschiedene Versuche, den Geruch von Aldiminhaltigen Systemen zu reduzieren.

US 4,469,831 beschreibt eine feuchtigkeitshärtende, 2,2-Dimethyl-3-(isobutyroxy)-propanaldimine aliphatischer Polyamine enthaltende einkomponentige Polyurethanzusammensetzung. Diese Zusammensetzung weist eine gute Lagerstabilität, eine hohe Aushärtungsgeschwindigkeit und angeblich wenig Geruch auf. Der Einsatz der beschriebenen Polyaldimine verursacht jedoch einen lange anhaltenden, stechenden Geruch, welcher für geruchssensible Anwendungen nicht tolerierbar ist.

US 4,853,454 beschreibt unter anderem eine ähnliche feuchtigkeitshärtende, substituierte 2,2-Dimethylpropanaldimine aliphatischer Polyamine enthaltende einkomponentige Polyurethanzusammensetzung. Die bei der Hydrolyse der beschriebenen Polyaldimine freigesetzten Aldehyde sollen aufgrund ihres hohen Dampfdruckes zu angeblich sehr geruchsarmen Zusammensetzungen führen. Beim Einsatz der beschriebenen Polyaldimine treten aber auch hier unangenehme, über lange Zeit wahrnehmbare Gerüche auf, was diese Substanzen für geruchssensible Anwendungen ungeeignet macht.

US 4,720,535 beschreibt feuchtigkeitshärtende, substituierte 2,2-Dimethylpropanaldimine aromatischer Polyamine enthaltende einkomponentige Polyurethanzusammensetzungen. Der Einsatz der beschriebenen Polyaldimine ist aufgrund der verwendeten aromatischen Polyamine ungeeignet. Einerseits sind aromatische Polyamine im allgemeinen deutlich toxischer als aliphatische, und andererseits sind Polyaldimine aromatischer Polyamine als Härter deutlich weniger reaktiv als solche von aliphatischen Polyaminen, sowohl in Bezug auf die Hydrolyse der Aldimingruppen als meist auch in Bezug auf die Reaktion der Aminogruppen mit den Isocyanatgruppen des Polyurethanprepolymers. Zudem verursachen die meisten der beschriebenen Aldehyde ebenfalls einen deutlich wahrnehmbaren bis starken Geruch.

US 6,136,942 beschreibt eine einkomponentige, 3-Phenyloxybenzaldimine aliphatischer Polyamine oder ähnliche Verbindungen enthaltende Polyurethanzusammensetzung, die geruchsarm aushärten soll. Der Geruch der beim Einsatz dieser Polyaldimine freigesetzten aromatischen Aldehyde ist jedoch deutlich wahrnehmbar und für geruchssensible Anwendungen ebenfalls nicht tolerierbar. Zudem kann sich die Anwesenheit von 3-Phenyloxybenzaldehyd und ähnlicher aromatischer Aldehyde störend auf die Lichtstabilität der ausgehärteten Polyurethanzusammensetzung auswirken.

Mit dem Stand der Technik ist es bisher nicht möglich, die Vorteile von feuchtigkeitshärtenden, Polyaldimine aliphatischer Polyamine enthaltenden einkomponentigen Polyurethanzusammensetzungen, wie keine Blasenbildung bei der Aushärtung, hohe Aushärtungsgeschwindigkeit und gute mechanische Eigenschaften nach der Aushärtung, für geruchssensible Anwendungen zu nutzen.

### Aufgabe und Lösung

Aufgabe der vorliegenden Erfindung war es, feuchtigkeitshärtende einkomponentige Polyurethanzusammensetzungen bereitzustellen, die als Härter mindestens ein Polyaldimin aliphatischer Polyamine enthalten, ohne störenden Geruch aushärten und sich damit unter anderem für geruchssensible Anwendungen eignen, wie beispielsweise das Abdichten von Fugen im Innern von Gebäuden oder das Verkleben von Bauteilen im Innenraum von Fahrzeugen. Eine geeignete Zusammensetzung muss einerseits aus kommerziell zugänglichen Rohstoffen einfach herstellbar sein, eine ausreichende Lagerstabilität aufweisen und nach der Applikation schnell genug aushärten. Der bei der Hydrolyse des Polyaldimins freigesetzte Aldehyd darf keinen störenden Geruch verursachen und keine nachteiligen Auswirkungen auf die ausgehärtete Polyurethanzusammensetzung haben.

Überraschenderweise wurde gefunden, dass die vorher genannten Bedingungen bestens erfüllt werden mit einer Zusammensetzung umfassend mindestens ein Polyurethanprepolymer mit Isocyanatendgruppen und mindestens ein Polyaldimin, welches aus mindestens einem Polyamin mit aliphatischen primären Aminogruppen und mindestens einem Aldehyd gemäss der später spezifizierten Formel erhältlich ist.

Die Herstellung der für die Polyaldimine verwendeten Aldehyde geht aus von leicht zugänglichen, kostengünstigen Rohstoffen und gelingt überraschend einfach durch Veresterung von schwerflüchtigen Carbonsäuren, beispielsweise langkettigen Fettsäuren, mit 3-Hydroxypivalaldehyd. Die so erhaltenen Aldehyde sind bei Raumtemperatur je nach der verwendeten Carbonsäure fest oder flüssig. Sie können anschliessend mit Polyaminen direkt zu den entsprechenden Polyaldiminen umgesetzt werden. Die erforderlichen Reaktionsschritte lassen sich alle ohne die Verwendung von Lösemitteln durchführen, wodurch keine Lösemittel-Rückstände in die Zusammensetzung gelangen, wo sie einen störenden Geruch und Fogging verursachen könnten. Da die bei der Herstellung der Aldehyde eingesetzten Carbonsäuren selber geruchsarm sind, verursachen Spuren davon ebenfalls keinen störenden Geruch, was eine aufwändige Reinigung der Polyaldimine vor der Verwendung überflüssig macht.

Überraschend und für den Fachmann nicht naheliegend ist die Tatsache, dass solche Polyaldimine eine genügend hohe Reaktivität als Härter für Polyurethane aufweisen. Der Fachmann würde erwarten, dass sie aufgrund ihrer hydrophoben Struktur für das für die Hydrolyse der Aldimingruppen erforderliche Wasser schlecht zugänglich sind, und dass deren Hydrolyse deshalb nur langsam und unvollständig abläuft. Wider Erwarten reagieren die beschriebenen Polyaldimine bei Kontakt mit Feuchtigkeit in der Polyurethanzusammensetzung jedoch schnell und vollständig. Ihre Reaktivität ist vergleichbar mit jener von wesentlich weniger hydrophoben Polyaldiminen, wie sie beispielsweise in US 4,469,831 beschrieben sind.

Die erfindungsgemässen Polyurethanzusammensetzungen weisen eine hervorragende Lagerstabilität auf. Sie härten bei Kontakt mit Feuchtigkeit sehr schnell aus, ohne dass ein störender Geruch entsteht. Der freigesetzte Aldehyd verbleibt in der ausgehärteten Polyurethanzusammensetzung, wo er keine nachteiligen Auswirkungen auf deren Eigenschaften hat. Seine Hydrophobie führt im Gegenteil zu einem durchaus erwünschten Anstieg der Hydrolysestabilität der ausgehärteten Polyurethanzusammensetzung.

### Zusammenfassung der Erfindung

Die vorliegende Erfindung betrifft Zusammensetzungen umfassend mindestens ein Polyurethanprepolymer **A** mit Isocyanatendgruppen, welches aus mindestens einem Polyisocyanat und mindestens einem Polyol hergestellt wird, und mindestens ein Polyaldimin **B**, welches erhältlich ist aus mindestens einem Polyamin **C** mit aliphatischen primären Aminogruppen und mindestens einem Aldehyd **D**.

Weiterhin offenbart ist die Herstellung dieser Zusammensetzungen, sowie die Herstellung des Polyaldimins.

Zusätzlich wird die Verwendung dieser Zusammensetzungen als Klebstoff, Dichtstoff, Beschichtung oder Belag beschrieben. Des weiteren zur Verfügung gestellt werden Verfahren zum Verkleben, Abdichten oder Beschichten. Schliesslich werden Artikel beschrieben, deren Oberfläche zumindest partiell mit einer solchen Zusammensetzung kontaktiert worden ist.

### Ausführliche Beschreibung der Erfindung

Die vorliegende Erfindung betrifft Zusammensetzungen umfassend mindestens ein Polyurethanprepolymer **A** mit Isocyanatendgruppen, welches aus mindestens einem Polyisocyanat und mindestens einem Polyol hergestellt wird, und mindestens ein Polyaldimin **B**, welches erhältlich ist aus mindestens einem Polyamin **C** mit aliphatischen primären Aminogruppen und mindestens einem Aldehyd **D** mit der Formel (I): 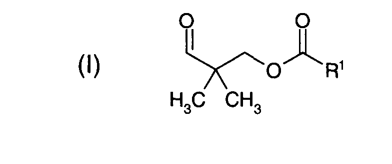 wobei der Rest R¹ entweder für eine lineare oder verzweigte Alkylkette mit 11 bis 30 C-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 C-Atomen, oder für einen Rest der Formel (II) oder (III) steht. 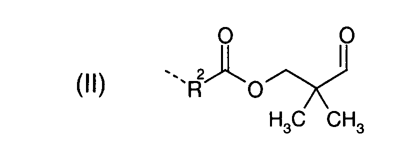 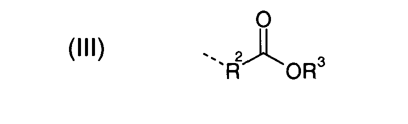 In den Formeln (II) und/oder (III) stehen R² für eine lineare oder verzweigte oder cyclische Alkylenkette mit 2 bis 16 C-Atomen, gegebenenfalls mit mindestens einem Heteroatom, insbesondere mit mindestens einem Ether-Sauerstoff, oder für eine einfach oder mehrfach ungesättigte lineare oder verzweigte oder cyclische Kohlenwasserstoffkette mit 2 bis 16 C-Atomen, und R³ für eine lineare oder verzweigte Alkylkette mit 1 bis 8 C-Atomen. Die gestrichelten Linien in den Formeln bezeichnen hierbei die Verbindungsstellen. Unter "Poly" in "Polyaldimin", "Polyol", "Polyisocyanat", "Polyamin" werden Moleküle verstanden, die formal zwei oder mehr der jeweiligen funktionellen Gruppen enthalten.

Der Begriff "Polyamine mit aliphatischen primären Aminogruppen" bezeichnet im vorliegenden Dokument stets Verbindungen, die formal zwei oder mehr NH₂-Gruppen enthalten, die an einen aliphatischen, cycloaliphatischen oder arylaliphatischen Rest gebunden sind. Sie unterscheiden sich damit von den aromatischen Aminen, in welchen die Aminogruppen direkt an einen aromatischen Rest gebunden sind, wie beispielsweise in Anilin oder 2-Aminopyridin.

Das Polyurethanprepolymer **A** wird aus mindestens einem Polyisocyanat und mindestens einem Polyol hergestellt. Diese Umsetzung kann dadurch erfolgen, dass das Polyol und das Polyisocyanat mit üblichen Verfahren, beispielsweise bei Temperaturen von 50 bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanprepolymer **A** nach der Umsetzung aller Hydroxylgruppen des Polyols ein Gehalt an freien Isocyanatgruppen von 0.1 bis 15 Gewichts-%, bevorzugt 0.5 bis 5 Gewichts-%, bezogen auf das gesamte Polyurethanprepolymer **A**, verbleibt. Gegebenenfalls kann das Polyurethanprepolymer **A** unter Mitverwendung von Lösemitteln oder Weichmachern hergestellt werden, wobei die verwendeten Lösemittel oder Weichmacher keine gegenüber Isocyanaten reaktive Gruppen enthalten.

Als Polyole für die Herstellung des Polyurethanprepolymers **A** können beispielsweise die folgenden handelsüblichen Polyole oder beliebige Mischungen davon eingesetzt werden:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Speziell geeignet sind Polyoxypropylendiole und -triole mit einem Ungesättigtheitsgrad tiefer als 0.02 mEq/g und mit einem Molekulargewicht im Bereich von 1000 - 30'000 g/mol, Polyoxypropylendiole und -triole mit einem Molekulargewicht von 400 - 8'000 g/mol, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen. Unter ,Molekulargewicht' oder ,Molgewicht' versteht man hierbei und im Folgenden stets das Molekulargewichtsmittel M_{w}.
- Polyhydroxyterminierte Polybutadienpolyole;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Diese genannten Polyole weisen ein mittleres Molekulargewicht von 250 - 30'000 g/mol und eine mittlere OH-Funktionalität im Bereich von 1.6 - 3 auf.

Zusätzlich zu diesen genannten Polyolen können niedrigmolekulare Verbindungen mit zwei oder mehr Hydroxylgruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, 1,1,1-Trimethylolethan, 1,1,1-Trimethylolpropan, Glycerin und Zuckeralkohole und andere höherwertige Alkohole, sowie Mischungen der vorgenannten hydroxylgruppenhaltigen Verbindungen bei der Herstellung des Polyurethanprepolymers **A** mitverwendet werden.

Für die Herstellung des Polyurethanprepolymers **A** werden handelsübliche Polyisocyanate verwendet. Als Beispiele seien die folgenden, in der Polyurethanchemie bestens bekannten Polyisocyanate erwähnt:

2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, 1,6-Hexamethylendiisocyanat, 2,2,4- und 2,4,4-Trimethyl-1,6-hexamethylendiisocyanat, 1,12-Dodecamethylendiisocyanat, Cyclohexan-1,3- und 1,4-diisocyanat und beliebige Gemische dieser Isomeren, 1-lsocyanato-3,3,5-trimethyl-5-isocyanatomethyl-cyclohexan (=Isophorondiisocyanat oder IPDI), Perhydro-2,4'- und -4,4'-diphenylmethandiisocyanat, 1,3- und 1,4-Tetramethylxylylendiisocyanat, sowie Oligomere und Polymere dieser Isocyanate, sowie beliebige Mischungen der vorgenannten Isocyanate. Besonders bevorzugt sind MDI, TDI und IPDI.

Das Polyaldimin **B** ist herstellbar aus mindestens einem Polyamin **C** mit aliphatischen primären Aminogruppen und mindestens einem Aldehyd **D** durch eine Kondensationsreaktion unter Abspaltung von Wasser. Solche Kondensationsreaktionen sind bestens bekannt und beschrieben, beispielsweise in Houben-Weyl, "Methoden der organischen Chemie", Vol. XI/2, Seite 73 ff.

Der Aldehyd **D** wird hierbei in Bezug auf die primären Aminogruppen des Polyamins **C** stöchiometrisch oder in stöchiometrischem Überschuss eingesetzt.

Als Polyamine **C** mit aliphatischen primären Aminogruppen zur Herstellung des Polyaldimins **B** kommen die in der Polyurethanchemie bekannten Polyamine in Frage, wie sie unter anderem für zweikomponentige Polyurethane verwendet werden. Als Beispiele seien die folgenden erwähnt: Aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexandiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 3,9-Bis-(3-aminopropyl)-2,4,8,10-tetraoxaspiro[5.5]undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman Chemicals), sowie Mischungen der vorgenannten Polyamine.

Bevorzugte Polyamine sind 1,6-Hexamethylendiamin, MPMD, DAMP, IPDA, 4-Aminomethyl-1,8-octandiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, Polyoxyalkylen-Polyamine mit theoretisch zwei oder drei Aminogruppen, insbesondere Jeffamine® EDR-148, Jeffamine® D-230, Jeffamine® D-400 und Jeffamine® T-403, sowie insbesondere Mischungen von zwei oder mehr der vorgenannten Polyamine.

Für die Herstellung des Polyaldimins **B** wird mindestens ein Aldehyd **D** eingesetzt mit der Formel (I):

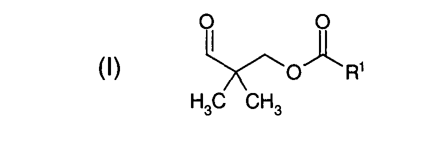

In einer bevorzugten Herstellmethode des Aldehyds **D** wird 3-Hydroxypivalaldehyd, welches beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt, nämlich entweder mit einer langkettigen Fettsäure R¹-COOH zum entsprechenden Fettsäureester von 3-Hydroxypivalaldehyd; und / oder mit einem Dicarbonsäuremonoalkylester HOOC―R²―COOR³ zum Aldehyd **D** mit dem Rest nach Formel (III); und / oder mit einer Dicarbonsäure HOOC―R²-COOH zum Aldehyd **D**, in diesem Falle ein Dialdehyd, mit dem Rest nach Formel (II). Die Formeln (II) und (III) und R¹, R² und R³ haben dabei die bereits beschriebene Bedeutung. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

Im Fall der Verwendung von Dicarbonsäuren wird ein Gemisch aus den Aldehyden **D** mit den Resten nach Formel (II) und nach Formel (III) erhalten, wenn beispielsweise zuerst ein Teil der Carbonsäuregruppen mit 3-Hydroxypivalaldehyd verestert wird, und anschliessend die restlichen Carbonsäuregruppen mit einem Alkylalkohol (R³-OH) verestert werden. Ein solches Gemisch kann zur Herstellung des Polyaldimins **B** direkt weiterverwendet werden.

Als geeignete Carbonsäuren zur Veresterung mit 3-Hydroxypivalaldehyd seien beispielsweise die folgenden erwähnt: Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, dehydrierte Ricinolsäuren, sowie Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl.

Bevorzugt sind Laurinsäure, Myristinsäure, Palmitinsäure, Stearinsäure, Ölsäure, Linolsäure, Linolensäure, Bernsteinsäure, Adipinsäure, Azelainsäure und Sebacinsäure und technische Gemische von Fettsäuren, welche diese Säuren enthalten.

Durch die Umsetzung mindestens eines Polyamins **C** mit aliphatischen primären Aminogruppen mit mindestens einem Aldehyd **D** entstehen beispielsweise Polyaldimine der schematischen Formeln (IV) und (V), 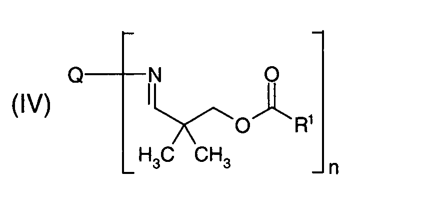 wobei n für 2, 3 oder 4 steht und Q den Rest eines Polyamins **C** mit aliphatischen primären Aminogruppen nach Entfernung aller primären Aminogruppen darstellen soll; und 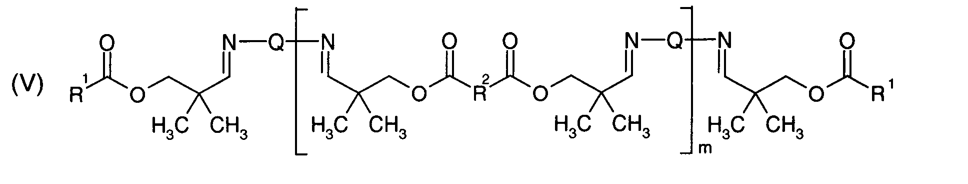 wobei m für eine ganze Zahl von 0 bis 10 steht und Q in demselben Molekül gleich oder verschieden ist und jeweils den Rest eines Polyamins **C** mit aliphatischen primären Aminogruppen nach Entfernung aller primären Aminogruppen darstellen soll. Die Reste R¹ und R² in den Formeln (IV) und (V) haben dabei die bereits beschriebene Bedeutung.

Wird ein Dialdehyd **D** mit dem Rest nach Formel (II) für die Herstellung eines Polyaldimins **B** verwendet, so wird dieser vorteilhaft entweder in einer Mischung mit einem Monoaldehyd **D** eingesetzt, und zwar in einem solchen Mengenverhältnis, dass für das Polyaldimin aus Formel (V) für m im Mittel Werte im Bereich von 1 bis 10 erhalten werden; oder er wird so dosiert, dass ein Überschuss an Aldehydgruppen im Verhältnis zu den Aminogruppen bei der Herstellung des Polyaldimins **B** vorhanden ist, wobei der Aldehyd-Überschuss so gewählt wird, dass für das Polyaldimin aus Formel (V) für m ebenfalls im Mittel Werte im Bereich von 1 bis 10 erhalten werden. Auf beide Arten wird ein Gemisch oligomerer Polyaldimine mit einer gut handhabbaren Viskosität erhalten.

Als Polyaldimin **B** können auch Mischungen verschiedener Polyaldimine verwendet werden, insbesondere auch Mischungen verschiedener Polyaldimine hergestellt mit Hilfe von verschiedenen Polyaminen **C** mit primären aliphatischen Aminogruppen, umgesetzt mit verschiedenen oder gleichen Aldehyden **D**, insbesondere auch Mischungen von Polyaldiminen hergestellt mit Hilfe von Polyaminen mit unterschiedlicher Anzahl primärer aliphatischer Aminogruppen, d.h. verschiedener Werte für n.

Das Polyurethanprepolymer **A** und das Polyaldimin **B** werden miteinander vermengt, wobei das Polyaldimin **B** in einer Menge von 0.1 bis 1.1 Equivalenten Aldimingruppen pro Equivalent Isocyanatgruppen des Polyurethanprepolymers A dosiert wird. Zusätzlich kann ein Katalysator für die Hydrolyse des Polyaldimins zugegeben werden, beispielsweise eine organische Carbonsäure wie Benzoesäure oder Salicylsäure, ein organisches Carbonsäureanhydrid wie Phthalsäureanhydrid oder Hexahydrophthalsäureanhydrid, ein Silylester organischer Carbonsäuren, eine organische Sulfonsäure wie p-Toluolsulfonsäure, oder eine andere organische oder anorganische Säure, oder Mischungen der vorgenannten Säuren.

Als zusätzliche Komponenten in den beschriebenen Polyurethanzusammensetzungen können unter anderem folgende, in der Polyurethanindustrie wohlbekannte Hilfs- und Zusatzmittel vorhanden sein:

Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, organische Phosphor- und Sulfonsäureester, Polybutene und andere, mit Isocyanaten nicht reagierende Verbindungen; Lösemittel; anorganische und organische Füllstoffe, wie zum Beispiel gemahlene oder gefällte Calciumcarbonate, welche gegebenenfalls mit Stearaten beschichtet sind, Russe, Kaoline, Aluminiumoxide, Kieselsäuren und PVC-Pulver; Fasern, beispielsweise aus Polyethylen; Pigmente; Katalysatoren wie beispielsweise Organozinnverbindungen wie Dibutylzinndilaurat, Dibutylzinndiacetylacetonat, oder andere, in der Polyurethanchemie übliche Katalysatoren für die Reaktion der Isocyanatgruppen; Rheologie-Modifizierer wie beispielsweise Verdickungsmittel, zum Beispiel Harnstoffverbindungen, Polyamidwachse, Bentonite oder pyrogene Kieselsäuren; Haftvermittler, insbesondere Silane wie Epoxysilane, Vinylsilane, Isocyanatosilane und mit Aldehyden zu Aldiminosilanen umgesetzte Aminosilane; Trocknungsmittel wie beispielsweise p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen.

Die beschriebenen Polyurethanzusammensetzungen werden hergestellt und aufbewahrt unter Ausschluss von Feuchtigkeit. Die Zusammensetzungen sind lagerstabil, d.h. sie können in einer geeigneten Verpackung oder Anordnung, wie beispielsweise in einem Fass, einem Beutel oder einer Kartusche, vor ihrer Anwendung während mehreren Monaten bis zu einem Jahr und länger aufbewahrt werden, ohne dass sie ihre Anwendbarkeit verlieren. Bei der Applikation kommen die Polyurethanzusammensetzungen in Kontakt mit Feuchtigkeit, worauf die Polyaldimine **B** zu Aldehyden **D** und Polyaminen **C** hydrolysieren und die Polyamine **C** mit dem isocyanatgruppenhaltigen Polyurethanprepolymer **A** reagieren und dieses somit aushärten. Entweder kann das für die Reaktion benötigte Wasser aus der Luft stammen (Luftfeuchtigkeit), oder die Polyurethanzusammensetzung kann mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Polyurethanzusammensetzung eine Wasser enthaltende Komponente zugesetzt werden, zum Beispiel in Form einer wasserhaltigen Paste, die beispielsweise über einen Statikmischer eingemischt werden kann.

Wird das Polyaldimin im Unterschuss eingesetzt, d.h. das Verhältnis der Aldimingruppen zu den Isocyanatgruppen unterstöchiometrisch gewählt, so reagieren die überschüssigen Isocyanatgruppen mit dem vorhandenen Wasser.

Die Reaktion des isocyanatgruppenhaltigen Polyurethanprepolymers **A** mit dem hydrolysierenden Polyaldimin **B** muss dabei nicht notwendigerweise über das Polyamin **C** erfolgen. Selbstverständlich sind auch Reaktionen mit Zwischenstufen der Hydrolyse des Polyaldimins **B** zum Polyamin **C** möglich. Beispielsweise ist es denkbar, dass das hydrolysierende Polyaldimin **B** in der Form eines Halbaminals direkt mit dem isocyanatgruppenhaltigen Polyurethanprepolymer **A** reagiert.

Als Folge der oben beschriebenen Reaktionen härtet die Polyurethanzusammensetzung aus.

Die beschriebene Polyurethanzusammensetzung zeichnet sich im ausgehärteten Zustand durch hervorragende mechanische Eigenschaften aus. Sie verfügt über hohe Dehnungen und hohe Zugfestigkeiten, bei Elastizitätsmodulen, welche sich durch Variation der eingesetzten Komponenten wie beispielsweise der Polyole, Polyisocyanate und Polyamine in einem weiten Bereich an die Bedürfnisse der jeweiligen Applikation angepasst einstellen lassen.

Die Aldehyde **D**, welche von Polyaldimin **B** bei dessen Hydrolyse abgespalten werden, zeichnen sich dadurch aus, dass sie aufgrund ihres hohen Dampfdruckes in der ausgehärteten Polyurethanzusammensetzung verbleiben, und dass sie dabei keinerlei störenden Geruch verursachen. Im Fall der Verwendung von langkettigen Fettsäuren bewirkt der hydrophobe Fettsäurerest eine geringere Wasseraufnahme der ausgehärteten Polyurethanzusammensetzung, was die Beständigkeit des Polyurethanmaterials gegenüber Hydrolyse erhöht. Zudem bietet ein hydrophober Fettsäurerest bei längerdauerndem Wasserkontakt einen guten Schutz gegen das Auswaschen der Aldehyde **D** aus der ausgehärteten Polyurethanzusammensetzung. Die Anwesenheit dieser Aldehyde in der ausgehärteten Polyurethanzusammensetzung bewirkt keine Verschlechterung der Lichtstabilität des Polyurethanmaterials, wie dies bei der Anwesenheit schwerflüchtiger aromatischer Aldehyde beobachtet wird.

Die beschriebene Polyurethanzusammensetzung ist geeignet als Dichtstoff aller Art, beispielsweise zum Abdichten von Fugen im Bau, als Klebstoff für das Verkleben von diversen Substraten, beispielsweise zum Verkleben von Bauteilen bei der Herstellung von Automobilen, Schienenfahrzeugen, Schiffen oder anderen industriellen Gütern, sowie als Beschichtung oder Belag für diverse Artikel beziehungsweise variable Untergründe.

Besonders geeignet ist sie für geruchssensible Anwendungen, wie beispielsweise das Abdichten von Fugen im Innern von Gebäuden und das Verkleben von Bauteilen im Innenraum von Fahrzeugen. Als Beschichtungen bevorzugt sind Schutzanstriche, Versiegelungen, Schutzbeschichtungen und Primer-Beschichtungen. Unter den Belägen sind besonders Bodenbeläge als bevorzugt zu nennen. Solche Beläge werden hergestellt, indem typischerweise eine reaktive Zusammensetzung auf den Untergrund gegossen und egalisiert wird, wo sie zu einem Bodenbelag aushärtet. Beispielsweise werden solche Bodenbeläge für Büros, Wohnbereiche, Spitäler, Schulen, Lagerhallen, Parkgaragen und andere private oder industrielle Anwendungen verwendet. Diese Anwendungen sind grossflächig, was selbst bei Anwendungen im Aussenbereich zu arbeitshygienischen Schwierigkeiten und / oder Geruchsbelästigungen führen kann. Weiterhin wird ein Grossteil der Fussbodenbeläge im Innenbereich appliziert. Deshalb stellt der Geruch bei Bodenbelägen generell ein grosses Problem dar.

Die Polyurethanzusammensetzung wird mit der Oberfläche eines beliebigen Untergrundes zumindest partiell kontaktiert. Bevorzugt ist eine gleichmässige Kontaktierung in Form eines Dicht- oder Klebstoffes, einer Beschichtung oder eines Belages, und zwar in den Bereichen, welche für den Einsatz eine Verbindung in Form einer Verklebung oder Dichtung benötigen oder aber deren Untergrund abgedeckt sein soll. Es kann durchaus nötig sein, dass der Untergrund bzw. der zu kontaktierende Artikel im Vorfeld des Kontaktierens einer physikalischen und / oder chemischen Vorbehandlung unterzogen werden muss, beispielsweise durch Schleifen, Sandstrahlen, Bürsten oder dergleichen, oder durch Behandeln mit Reinigern, Lösemitteln, Haftvermittlern, Haftvermittlerlösungen oder Primern, oder dem Aufbringen einer Haftbrücke oder eines Sealers.

### Beispiele

Alle Prozent-Angaben beziehen sich, wo nicht anders angegeben, auf Gewichts-Prozente.

### Verwendete Polyamine:

alpha, omega-Polyoxypropylendiamin (Jeffamine® D-230, Huntsman): Totaler Gehalt primärer Amine ≥ 97%; Amin-Gehalt = 8.22 mmol NH₂/g.

1,3-Xylylendiamin (MXDA; Mitsubishi Gas Chemical): Gehalt MXDA ≥ 99%; Amin-Gehalt = 14.56 mmol NH₂/g.

1,5-Diamino-2-methylpentan (MPMD; DuPont): Gehalt MPMD ≥ 98.5%; Amin-Gehalt = 17.11 mmol NH₂/g.

### Verwendete Polyole:

Acclaim® 4200 N (Bayer): Lineares Polypropylenoxid-Polyol mit theoretischer OH-Funktionalität 2, mittlerem Molekulargewicht ca. 4000, OH-Zahl ca. 28 mg KOH/g, Ungesättigtheitsgrad ca. 0.005 mEq/g.

Acclaim® 12200 (Bayer): Lineares Polypropylenoxid-Polyol mit theoretischer OH-Funktionalität 2, mittlerem Molekulargewicht ca. 12000, OH-Zahl ca. 11 mg KOH/g, Ungesättigtheitsgrad ca. 0.005 mEq/g.

Caradol® MD34-02 (Shell): Nichtlineares Polypropylenoxidpolyethylenoxid-Polyol, Ethylenoxid-terminiert, mit theoretischer OH-Funktionalität 3, mittlerem Molekulargewicht ca. 4900, OH-Zahl ca. 35 mg KOH/g, Ungesättigtheitsgrad ca. 0.08 mEq/g.

### Beschreibung der Prüfmethoden:

Die Viskosität wurde bei 20 °C auf einem Kegel-Platten-Viskosimeter der Fa. Haake (PK100 / VT-500) gemessen.

Die Hautbildungszeit (Zeit bis zur Klebefreiheit, "tack-free time") wurde bestimmt bei 23 °C und 50% relativer Luftfeuchtigkeit.

Zugfestigkeit, Bruchdehnung und E-Modul bei 0.5-5% Dehnung wurden bestimmt an während 7 Tagen bei 23 °C und 50% relativer Luftfeuchtigkeit ausgehärteten Filmen nach DIN EN 53504 (Zuggeschwindigkeit: 200 mm/min).

Die Blasenbildung wurde qualitativ beurteilt anhand der Menge der Blasen, die während der Aushärtung (bei 23 °C und 50% relativer Luftfeuchtigkeit) der für die mechanischen Prüfungen verwendeten Filme (Schichtdicke 2 mm) auftraten.

Der Geruch wurde an den ausgegossenen Filmen beurteilt durch Riechen mit der Nase im Abstand von 10 cm, ein erstes Mal an der unmittelbar zuvor applizierten Zusammensetzung, und ein zweites Mal 7 Tage danach an der bei 23 °C und 50% relativer Luftfeuchtigkeit ausgehärteten Zusammensetzung.

### Herstellung der Polyurethanprepolymere

### Polyurethanprepolymer PP1

259 g Polyol Acclaim® 4200 N, 517 g Polyol Caradol® MD34-02, 124 g 4,4'-Methylendiphenyldiisocyanat (MDI; Desmodur® 44 MC L, Bayer) und 100 g Diisodecylphthalat wurden nach bekanntem Verfahren bei 80 °C zu einem NCO-terminierten Polyurethanprepolymeren umgesetzt. Das Reaktionsprodukt hatte einen titrimetrisch bestimmten Gehalt an freien Isocyanat-Gruppen von 2.30%, bezogen auf das Polyurethanprepolymer, und eine Viskosität bei 20 °C von 56 Pa·s.

### Polyurethanprepolymer PP2

845 g Polyol Acclaim® 4200 N und 115 g 4,4'-Methylendiphenyldiisocyanat (MDI; Desmodur® 44 MC L, Bayer) wurden nach bekanntem Verfahren bei 80 °C zu einem NCO-terminierten Polyurethanprepolymeren umgesetzt. Das Reaktionsprodukt hatte einen titrimetrisch bestimmten Gehalt an freien Isocyanat-Gruppen von 1.96% und eine Viskosität bei 20 °C von 37 Pa·s.

### Polyurethanprepolymer PP3

937 g Polyol Acclaim® 4200 N, 57 g Tripropylenglykol und 285 g 4,4'-Methylendiphenyldiisocyanat (MDI; Desmodur® 44 MC L, Bayer) wurden nach bekanntem Verfahren bei 80 °C zu einem NCO-terminierten Polyurethanprepolymeren umgesetzt. Das Reaktionsprodukt hatte einen titrimetrisch bestimmten Gehalt an freien Isocyanat-Gruppen von 3.76% und eine Viskosität bei 20 °C von 58 Pa·s.

### Polyurethanprepolymer PP4

1515 g Polyol Acclaim® 12200 und 82 g Isophorondiisocyanat (IPDI; Vestanat® IPDI, Degussa) wurden nach bekanntem Verfahren bei 100 °C zu einem NCO-terminierten Polyurethanprepolymeren umgesetzt. Das Reaktionsprodukt hatte einen titrimetrisch bestimmten Gehalt an freien Isocyanat-Gruppen von 0.93% und eine Viskosität bei 20 °C von 45 Pa·s.

### Herstellung der Polyaldimine

### Polyaldimin PA1

In einen Rundkolben mit Rückflusskühler und Wasserabscheider (Dean Stark) wurden 40.5 g Formaldehyd (37% in Wasser, methanolfrei), 36.0 g Isobutyraldehyd, 100.0 g Laurinsäure und 1.0 g 4-Toluolsulfonsäure eingewogen und unter Stickstoffatmosphäre gestellt. Die Mischung wurde im Ölbad unter kräftigem Rühren erwärmt, worauf sich Wasser abzuscheiden begann. Nach vier Stunden wurde die Apparatur im Wasserstrahlvakuum evakuiert. Es sammelten sich insgesamt rund 35 mL Destillat im Abscheider. Das Reaktionsgemisch wurde abgekühlt, und aus einem Eintropftrichter wurden 48.6 g Jeffamine® D-230 zugegeben. Danach wurden die flüchtigen Bestandteile vollständig abdestilliert. Das so erhaltene, bei Raumtemperatur flüssige Reaktionsprodukt wies einen Aldimin-Gehalt, bestimmt als Amin-Gehalt, von 2.17 mmol NH₂/g und eine Viskosität bei 20 °C von 700 mPa·s auf.

### Polyaldimin PA2

Wie für Polyaldimin PA1 beschrieben wurden 42.8 g Formaldehyd (37% in Wasser, methanolfrei), 38.0 g Isobutyraldehyd, 150.0 g Stearinsäure und 1.0 g 4-Toluolsulfonsäure unter Abscheidung von rund 37 mL Wasser umgesetzt und das dabei erhaltene Reaktionsgemisch mit 57.0 g Jeffamine® D-230 versetzt. Nach Entfernen der flüchtigen Bestandteile erhielt man ein bei Raumtemperatur festes Reaktionsprodukt, das einen Aldimin-Gehalt, bestimmt als Amin-Gehalt, von 1.93 mmol NH₂/g aufwies.

### Polyaldimin PA3

Wie für Polyaldimin PA1 beschrieben wurden 60.2 g Formaldehyd (37% in Wasser, methanolfrei), 53.5 g Isobutyraldehyd, 100.0 g Sebacinsäure und 1.0 g 4-Toluolsulfonsäure unter Abscheidung von rund 52 mL Wasser umgesetzt. Das dabei erhaltene Reaktionsgemisch wurde abgekühlt, mit 19.0 g n-Butanol versetzt, 30 Minuten gerührt und wieder erwärmt, worauf sich erneut Wasser abzuscheiden begann. Nach einer Stunde wurde die Apparatur im Wasserstrahlvakuum evakuiert. Es sammelten sich insgesamt rund 57 mL (52 mL + 5 mL) Destillat im Abscheider. Das Reaktionsgemisch wurde abgekühlt und mit 72.0 g Jeffamine® D-230 versetzt. Nach Entfernen der flüchtigen Bestandteile erhielt man ein bei Raumtemperatur flüssiges Reaktionsprodukt, das einen Aldimin-Gehalt, bestimmt als Amin-Gehalt, von 2.49 mmol NH₂/g und eine Viskosität bei 20 °C von 6'700 mPa·s aufwies.

### Polyaldimin PA4

Wie für Polyaldimin PA1 beschrieben wurden 40.5 g Formaldehyd (37% in Wasser, methanolfrei), 36.0 g Isobutyraldehyd, 100.0 g Laurinsäure und 1.0 g 4-Toluolsulfonsäure unter Abscheidung von 35 mL Wasser umgesetzt und das dabei erhaltene Reaktionsgemisch mit 26.0 g MXDA versetzt. Nach Entfernen der flüchtigen Bestandteile erhielt man ein bei Raumtemperatur zuerst flüssiges, dann langsam zum Teil kristallisierendes Reaktionsprodukt, das einen Aldimin-Gehalt, bestimmt als Amin-Gehalt, von 2.33 mmol NH₂/g aufwies.

### Polyaldimin PA5

Wie für Polyaldimin PA1 beschrieben wurden 22.3 g Paraformaldehyd, 53.5 g Isobutyraldehyd, 49.5 g Laurinsäure, 50.0 g Sebacinsäure und 1.0 g 4-Toluolsulfonsäure unter Abscheidung von knapp 14 mL Wasser umgesetzt und das dabei erhaltene Reaktionsgemisch mit 33.0 g MPMD versetzt. Nach Entfernen der flüchtigen Bestandteile erhielt man ein bei Raumtemperatur flüssiges Reaktionsprodukt, das einen Aldimin-Gehalt, bestimmt als Amin-Gehalt, von 3.05 mmol NH₂/g und eine Viskosität bei 20 °C von 13'000 mPa·s aufwies.

### Polyaldimin PA6

In einen Rundkolben mit Thermometer und Wasserabscheider (Dean Stark) wurden 51.0 g 3-Hydroxypivalaldehyd (dimere Form), 100.0 g Laurinsäure und 1.0 g 4-Toluolsulfonsäure eingewogen und unter Stickstoffatmosphäre gestellt. Die Mischung wurde im Ölbad unter kräftigem Rühren erwärmt, worauf sich Wasser abzuscheiden begann. Nach vier Stunden wurde die Apparatur im Wasserstrahlvakuum evakuiert. Es sammelten sich insgesamt gut 9 mL Destillat im Abscheider. Das Reaktionsgemisch wurde abgekühlt, und aus einem Eintropftrichter wurden 48.6 g Jeffamine® D-230 zugegeben. Danach wurden die flüchtigen Bestandteile vollständig abdestilliert. Das so erhaltene, bei Raumtemperatur flüssige Reaktionsprodukt wies einen Aldimin-Gehalt, bestimmt als Amin-Gehalt, von 2.19 mmol NH₂/g und eine Viskosität bei 20 °C von 700 mPa·s auf.

### Polyaldimin PA7

In einem Rundkolben wurden 100.0 g Jeffamine® D-230 vorgelegt. Unter guter Kühlung und kräftigem Rühren wurden aus einem Eintropftrichter 75.0 g Isobutyraldehyd zugegeben. Nach 12 Stunden Rühren wurden die flüchtigen Bestandteile abdestilliert. Das so erhaltene, bei Raumtemperatur flüssige Reaktionsprodukt wies einen Aldimin-Gehalt, bestimmt als Amin-Gehalt, von 5.66 mmol NH₂/g auf.

### Polyaldimin PA8

In einem Rundkolben wurden 62.0 g Jeffamine® D-230 vorgelegt. Unter guter Kühlung und kräftigem Rühren wurden aus einem Eintropftrichter 89.5 g 2,2-Dimethyl-3-isobutyroxy-propanal zugegeben. Nach 10 Minuten Rühren wurden die flüchtigen Bestandteile abdestilliert. Das so erhaltene, bei Raumtemperatur flüssige Reaktionsprodukt wies einen Aldimin-Gehalt, bestimmt als Amin-Gehalt, von 3.58 mmol NH₂/g auf.

### Polyaldimin PA9

Wie für Polyaldimin PA8 beschrieben wurden 45.0 g MXDA mit 115.0 g 2,2-Dimethyl-3-isobutyroxy-propanal umgesetzt. Das so erhaltene, bei Raumtemperatur flüssige Reaktionsprodukt wies einen Aldimin-Gehalt, bestimmt als Amin-Gehalt, von 4.43 mmol NH₂/g auf.

### Beispiele 1-3 (erfindungsgemäss) und Beispiele 4-6 (Vergleich)

Die in Tabelle 1 angegebenen Polyurethanprepolymere und Polyaldimine wurden im NH₂/NCO-Verhältnis (d.h. Equivalente Aldimingruppen pro Equivalente Isocyanatgruppen des Polyurethanprepolymers) von 0.5/1.0 homogen gemischt. Die Mischung wurde mit Benzoesäure (200 mg/100 g Polyurethanprepolymer) versetzt, erneut homogen gemischt und sofort in luftdichte Tuben abgefüllt und diese während 15 Stunden bei 60 °C gelagert. Dann wurde ein Teil der Mischung in ein mit PTFE beschichtetes Blech gegossen (Filmdicke ca. 2 mm), während 7 Tagen bei 23 °C und 50% relativer Luftfeuchtigkeit ausgehärtet und anschliessend die mechanischen Eigenschaften des durchgehärteten Films gemessen. Mit dem verbleibenden Tubeninhalt wurde die Lagerstabilität bestimmt durch Messung der Viskosität vor und nach Lagerung während 7 Tagen bei 60 °C. Die Ergebnisse der Prüfungen sind in Tabelle 1 aufgeführt.

**Tabelle 1**

| **Beispiel** | **1** | **2** | **3** | **4 Vergleich** | **5 Vergleich** | **6 Vergleich** |
|---|---|---|---|---|---|---|
| Polyurethanprepolymer | PP1 | PP1 | PP1 | PP1 | PP1 | PP1 |
| Polyaldimin | PA1 | PA2 | PA3 | PA7 | PA8 | - |
| Viskosität vor Lagerung (Pa·s) | 50 | 66 | 70 | 120 | 48 | 56 |
| Viskosität nach Lagerung (Pa·s) (Pa·s) | 59 | 79 | 81 | - (geliert) | 58 | 61 |
| Hautbildungszeit (Min.) | 35 | 38 | 45 | 25 | 29 | >600 |
| Blasenbildung | keine | keine | keine | keine | keine | sehr stark |
| Zugfestigkeit (MPa) | 1.3 | 1.2 | 1.1 | 1.2 | 1.2 | n.m. |
| Bruchdehnung (%) | 150 | 160 | 130 | 140 | 150 | n.m. |
| E-Modul 0.5-5% (MPa) | 1.7 | 1.5 | 1.7 | 2.1 | 2.0 | n.m. |
| Geruch bei Applikation | keiner | keiner | keiner | sehr stark | stark | keiner |
| Geruch nach 7 Tagen | keiner | keiner | keiner | schwach | stark | keiner |
| (n.m. = nicht messbar) | | | | | | |

Die Ergebnisse zeigen, dass die erfindungsgemässen Zusammensetzungen der Beispiele 1-3 lagerstabil sind, eine gute Reaktivität (Hautbildungszeit) aufweisen und blasenfrei aushärten. Sie geben dabei weder bei der Applikation noch später einen störenden Geruch ab und verfügen im ausgehärteten Zustand über gute mechanische Eigenschaften. Das nach dem Stand der Technik formulierte Vergleichsbeispiel 4 ist nicht lagerstabil und weist einen starken Geruch auf. Das nach US 4,469,831 formulierte Vergleichsbeispiel 5 ist in Bezug auf Lagerstabilität, Reaktivität, Blasenbildung sowie den mechanischen Eigenschaften den Beispielen 1-3 ebenbürtig; allerdings gibt es schon während dem Aushärten und auch noch lange danach einen deutlich wahrnehmbaren, störenden Geruch ab. Das ganz ohne Polyaldimin formulierte Vergleichsbeispiel 6 schliesslich ist wohl geruchsfrei, zeigt aber eine ungenügende Reaktivität (langsame Hautbildungszeit) und eine starke Tendenz zur Blasenbildung.

### Beispiele 7-8 (erfindungsgemäss) und Beispiel 9 (Vergleich)

Gleich wie in Beispiel 1 beschrieben wurden Zusammensetzungen aus verschiedenen Polyurethanprepolymeren und Polyaldiminen hergestellt und geprüft (verwendetes NH₂/NCO-Verhältnis = 0.7/1.0).

Die dabei eingesetzten Polyurethanprepolymere und Polyaldimine sowie die Ergebnisse der Prüfungen sind in der Tabelle 2 aufgeführt.

**Tabelle 2**

| **Beispiel** | **7** | **8** | **9 Vergleich** |
|---|---|---|---|
| Polyurethanprepolymer | PP2 | PP2 | PP2 |
| Polyaldimin | PA4 | PA5 | PA9 |
| Viskosität vor Lagerung (Pa·s) | 32 | 36 | 34 |
| Viskosität nach Lagerung (Pa·s) | 37 | 43 | 38 |
| Hautbildungszeit (Min.) | 40 | 50 | 40 |
| Blasenbildung | keine | keine | keine |
| Zugfestigkeit (MPa) | 9.1 | 3.0* | 7.5 |
| Bruchdehnung (%) | 1300 | >1300 | 1300 |
| E-Modul 0.5-5% (MPa) | 3.6 | 0.8 | 4.5 |
| Geruch bei Applikation | keiner | keiner | stark |
| Geruch nach 7 Tagen | keiner | keiner | stark |

| | | | |
|---|---|---|---|
| * Wert bei max. Dehnung (1300%) | | | |

Die Ergebnisse zeigen, dass die erfindungsgemässen Zusammensetzungen der Beispiele 7-8 lagerstabil sind, eine gute Reaktivität (Hautbildungszeit) aufweisen und blasenfrei aushärten. Sie geben dabei weder bei der Applikation noch später einen störenden Geruch ab und verfügen im ausgehärteten Zustand über gute mechanische Eigenschaften. Letztere hängen stark vom verwendeten Polyaldimin (bzw. dem diesem zugrundeliegenden Polyamin) ab, wie die Unterschiede zwischen den beiden Beispielen deutlich zeigen. Das nach US 4,469,831 formulierte Vergleichsbeispiel 9 ist in Bezug auf Lagerstabilität, Reaktivität, Blasenbildung sowie den mechanischen Eigenschaften ebenbürtig; allerdings gibt es schon während dem Aushärten und auch noch lange danach einen deutlich wahrnehmbaren, störenden Geruch ab.

### Beispiele 10-11 (erfindungsgemäss) und Beispiel 12 (Vergleich)

Gleich wie in Beispiel 1 beschrieben wurden Zusammensetzungen aus verschiedenen Polyurethanprepolymeren und Polyaldiminen hergestellt und geprüft (verwendetes NH₂/NCO-Verhältnis = 0.5/1.0).

**Tabelle 3**

| **Beispiel** | **10** | **11** | **12 Vergleich** |
|---|---|---|---|
| Polyurethanprepolymer | PP3 | PP3 | PP3 |
| Polyaldimin | PA6 | PA4 | PA8 |
| Viskosität vor Lagerung (Pa·s) | 31 | 38 | 40 |
| Viskosität nach Lagerung (Pa·s) | 37 | 44 | 44 |
| Hautbildungszeit (Min.) | 100 | 85 | 80 |
| Blasenbildung | keine | keine | keine |
| Zugfestigkeit (MPa) | 6.2 | 7.6 | 7.5 |
| Bruchdehnung (%) | 860 | 900 | 700 |
| E-Modul 0.5-5% (MPa) | 1.7 | 5.0 | 2.4 |
| Geruch bei Applikation | keiner | keiner | stark |
| Geruch nach 7 Tagen | keiner | keiner | stark |

Die dabei eingesetzten Polyurethanprepolymere und Polyaldimine sowie die Ergebnisse der Prüfungen sind in der Tabelle 3 aufgeführt.

Die Ergebnisse zeigen, dass die erfindungsgemässen Zusammensetzungen der Beispiele 10-11 lagerstabil sind, eine gute Reaktivität (Hautbildungszeit) aufweisen und blasenfrei aushärten. Sie geben dabei weder bei der Applikation noch später einen störenden Geruch ab und verfügen im ausgehärteten Zustand über gute mechanische Eigenschaften. Letztere variieren mit dem verwendeten Polyaldimin (bzw. dem diesem zugrundeliegenden Polyamin), was bei einem Vergleich der Prüfwerte für die beiden Beispiele deutlich wird. Das nach US 4,469,831 formulierte Vergleichsbeispiel 12 ist in Bezug auf Lagerstabilität, Reaktivität, Blasenbildung sowie den mechanischen Eigenschaften ebenbürtig; allerdings gibt es schon während dem Aushärten und auch noch lange danach einen deutlich wahrnehmbaren, störenden Geruch ab.

### Beispiel 13 (erfindungsgemäss) und Beispiel 14 (Vergleich)

Gleich wie in Beispiel 1 beschrieben wurden Zusammensetzungen aus verschiedenen Polyurethanprepolymeren und Polyaldiminen hergestellt und geprüft (verwendetes NH₂/NCO-Verhältnis = 0.9/1.0). Die dabei eingesetzten Polyurethanprepolymere und Polyaldimine sowie die Ergebnisse der Prüfungen sind in der Tabelle 4 aufgeführt.

**Tabelle 4**

| **Beispiel** | **13** | **14 Vergleich** |
|---|---|---|
| Polyurethanprepolymer | PP4 | PP4 |
| Polyaldimin | PA4 | PA9 |
| Viskosität vor Lagerung (Pa·s) | 37 | 38 |
| Viskosität nach Lagerung (Pa·s) | 42 | 41 |
| Hautbildungszeit (Min.) | 240 | 220 |
| Blasenbildung | keine | keine |
| Geruch nach Applikation | keiner | stark |
| Geruch nach 7 Tagen | keiner | stark |

Die Ergebnisse zeigen, dass die erfindungsgemässen Zusammensetzung des Beispiels 13 lagerstabil ist, eine gute Reaktivität (Hautbildungszeit) aufweist und blasenfrei aushärtet. Sie gibt dabei weder bei der Applikation noch später einen störenden Geruch ab. Das nach US 4,469,831 formulierte Vergleichsbeispiel 14 ist in Bezug auf Lagerstabilität, Reaktivität und Blasenbildung ebenbürtig; allerdings gibt es während und nach dem Aushärten einen deutlich wahrnehmbaren, störenden Geruch ab.

## Patentansprüche

1. Zusammensetzung umfassend
mindestens ein Polyurethanprepolymer **A** mit Isocyanatendgruppen, hergestellt aus mindestens einem Polyisocyanat und mindestens einem Polyol;
und
mindestens ein Polyaldimin **B**, welches erhältlich ist aus mindestens einem Polyamin **C** mit aliphatischen primären Aminogruppen
und
mindestens einem Aldehyd **D** der Formel 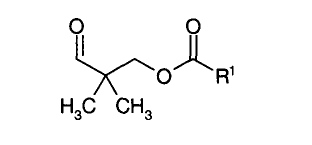 wobei R¹ entweder
für eine lineare oder verzweigte Alkylkette mit 11 bis 30 C-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 C-Atomen steht;
oder für 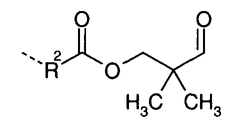 steht;
oder für 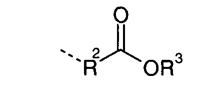 steht;
wobei R² für eine lineare oder verzweigte oder cyclische Alkylenkette mit 2 bis 16 C-Atomen, gegebenenfalls mit mindestens einem Heteroatom, insbesondere mit mindestens einem Ether-Sauerstoff, oder für eine einfach oder mehrfach ungesättigte lineare oder verzweigte oder cyclische Kohlenwasserstoffkette mit 2 bis 16 C-Atomen steht, und R³ für eine lineare oder verzweigte Alkylkette mit 1 bis 8 C-Atomen steht.

2. Zusammensetzung gemäss Anspruch 1, **dadurch gekennzeichnet, dass** das Polyurethanprepolymer **A** einen Gehalt an freien Isocyanatgruppen von 0.1 bis 15 Gewichts-%, bevorzugt 0.5 - 5 Gewichts-%, bezogen auf das gesamte Polyurethanprepolymer, aufweist.

3. Zusammensetzung gemäss Anspruch 1 oder 2, **dadurch gekennzeichnet, dass** das Polyisocyanat für die Herstellung des Polyurethanprepolymers A ein Diisocyanat ist, insbesondere ausgewählt aus der Gruppe von MDI, TDI und IPDI.

4. Zusammensetzung gemäss einem der vorhergehenden Ansprüche, **dadurch gekennzeichnet, dass** das Polyol für die Herstellung des Polyurethanprepolymers **A** eine mittlere OH-Funktionalität von 1.6 bis 3 aufweist.

5. Zusammensetzung gemäss Anspruch 4, **dadurch gekennzeichnet, dass** das Polyol ein Polyoxyalkylenpolyol ist, insbesondere mit einem Ungesättigtheitsgrad <0.02 mEq/g und einem Molekulargewicht M_{w} von 1'000 - 30'000 g/mol.

6. Zusammensetzung gemäss Anspruch 5, **dadurch gekennzeichnet, dass** das Polyol ein mittels DMC-Katalyse hergestelltes Polyol ist.

7. Zusammensetzung gemäss Anspruch 4, **dadurch gekennzeichnet, dass** das Polyol ein Polyoxyalkylenpolyol ist, insbesondere mit einem Molekulargewicht M_{w} von 400 - 8'000 g/mol.

8. Zusammensetzung gemäss einem der Ansprüche 4 - 7, **dadurch gekennzeichnet, dass** das Polyol ein Polyoxypropylenpolyol oder ein EOendcapped Polyoxypropylenpolyol ist.

9. Zusammensetzung gemäss einem der vorhergehenden Ansprüche, **dadurch gekennzeichnet, dass** für die Herstellung des Polyaldimins **B** der Aldehyd **D** stöchiometrisch oder im stöchiometrischen Überschuss in Bezug auf die primären Aminogruppen des Polyamins **C** eingesetzt wird.

10. Zusammensetzung gemäss einem der vorhergehenden Ansprüche, **dadurch gekennzeichnet, dass** das Polyurethanprepolymer **A** und das Polyaldimin **B** im Verhältnis von 0.1 - 1.1 Equivalent Aldimingruppen pro Equivalent Isocyanatgruppen vorliegen.

11. Zusammensetzung gemäss einem der vorhergehenden Ansprüche, **dadurch gekennzeichnet, dass** das Polyamin **C** mit aliphatischen primären Aminogruppen ausgewählt ist aus der Gruppe bestehend aus 1,6-Hexamethylendiamin, MPMD, DAMP, IPDA, 4-Aminomethyl-1,8-octandiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, Polyoxyalkylen-Polyamine mit theoretisch zwei oder drei Aminogruppen, insbesondere Jeffamine® EDR-148, Jeffamine® D-230, Jeffamine® D-400 und Jeffamine® T-403, sowie Mischungen von zwei oder mehr der vorgenannten Polyamine.

12. Zusammensetzung gemäss einem der vorhergehenden Ansprüche, **dadurch gekennzeichnet, dass** der für die Herstellung des Polyaldimins **B** verwendete Aldehyd **D** durch eine Veresterungsreaktion von 3-Hydroxypivalaldehyd, welcher gegebenenfalls in situ aus Formaldehyd, beziehungsweise Paraformaldehyd, und Isobutyraldehyd hergestellt wird, mit einer Carbonsäure, insbesondere ohne Verwendung eines Lösemittels, erhältlich ist.

13. Zusammensetzung gemäss Anspruch 12, **dadurch gekennzeichnet, dass** die für die Herstellung des Aldehyds **D** verwendete Carbonsäure ausgewählt ist aus der Gruppe umfassend Laurinsäure, Myristinsäure, Palmitinsäure, Stearinsäure, Ölsäure, Linolsäure, Linolensäure, Bernsteinsäure, Adipinsäure, Azelainsäure und Sebacinsäure.

14. Verfahren zur Herstellung der Zusammensetzung gemäss einem der Ansprüche 1 - 13, umfassend einen Schritt der Herstellung eines Polyaldimins durch Umsetzung eines Aldehyds mit einem Amin.

15. Verfahren zur Herstellung der Zusammensetzung gemäss Anspruch 14, umfassend zusätzlich einen Schritt der Herstellung eines Aldehyds **D** aus einer Carbonsäure und 3-Hydoxypivalaldehyd und Isobutyraldehyd, insbesondere ohne Verwendung eines Lösemittels, wobei 3-Hydroxypivalaldehyd, gegebenenfalls in situ, aus Formaldehyd, beziehungsweise Paraformaldehyd, hergestellt wird.

16. Verwendung der Zusammensetzung gemäss einem der Ansprüche 1 - 13 als Klebstoff, Dichtstoff, Beschichtung oder Belag.

17. Anordnung, **dadurch gekennzeichnet, dass** sie eine Zusammensetzung nach einem der Ansprüche 1 - 13 enthält.

18. Artikel, dessen Oberfläche zumindest partiell mit einer Zusammensetzung gemäss einem der Ansprüche 1 - 13 kontaktiert worden ist.

19. Verfahren zum Verkleben, **dadurch gekennzeichnet, dass** es einen Schritt des Kontaktierens mit einer Zusammensetzung gemäss einem der Ansprüche 1 - 13 umfasst.

20. Verfahren zum Abdichten, **dadurch gekennzeichnet, dass** es einen Schritt des Kontaktierens mit einer Zusammensetzung gemäss einem der Ansprüche 1 - 13 umfasst.

21. Verfahren zum Beschichten, **dadurch gekennzeichnet, dass** es einen Schritt des Kontaktierens mit einer Zusammensetzung gemäss einem der Ansprüche 1 - 13 umfasst.

22. Verfahren gemäss einem der Ansprüche 19 - 21, **dadurch gekennzeichnet, dass** es einen zusätzlichen Schritt des Aushärtens an der Luft umfasst.

23. Verfahren gemäss einem der Ansprüche 19 - 22, **dadurch gekennzeichnet, dass** es zusätzlich einen Schritt des Kontaktierens mit einer wasserhaltigen Komponente oder eine Beimischung derselben umfasst.
